# FASCICULE DE BREVET EUROPEEN

(11) **EP 2 417 030 B1**
(45) Date de publication et mention de la délivrance du brevet: **14.01.2015**
(21) Numéro de dépôt: 10713909.9
(22) Date de dépôt: 08.04.2010
(51) Int. Cl.: B65D 25/00, B65D 85/30, B65G 15/12, B65G 17/00, B65G 21/20

(54) **CONTENEUR AVEC UN DISPOSITIF DE STOCKAGE ET SYSTÈME DE TRANSPORT D'UN TEL DISPOSITIF**
BEHÄLTER MIT EINER LAGERVORRICHTUNG UND TRANSPORTSYSTEM FÜR EINE SOLCHE VORRICHTUNG
CONTAINER WITH A STORAGE DEVICE AND TRANSPORTATION SYSTEM FOR THE STORAGE DEVICE

(30) Priorité: 08.04.2009 FR 0952308
(43) Date de publication de la demande: 15.02.2012
(73) Titulaire: Moutie, Philippe, 92200 Neuilly sur Seine (FR)
(72) Inventeur: Moutie, Philippe, 92200 Neuilly sur Seine (FR)
(74) Mandataire: Regimbeau
(86) Numéro de dépôt international: PCT/EP2010/054643
(87) Numéro de publication internationale: WO 2010/115956

(56) Documents cités:
- WO-A1-97/15514
- WO-A2-2005/005289
- WO-A2-2006/040421
- US-A- 3 724 628
- US-A- 4 279 337
- US-A- 4 403 687

## Description

### DOMAINE TECHNIQUE

L'invention concerne le domaine des dispositifs de stockage et les systèmes de transport, notamment pour le stockage et le transport de marchandises et de produits de consommation quotidienne.

Plus particulièrement, l'invention concerne un conteneur avec un dispositif de stockage, tel qu'une cassette, permettant de contenir ce qui est généralement décrit comme « petits colis », c'est-à-dire des produits ou des marchandises d'une quantité de l'ordre de grandeur d'un foyer de consommation, ainsi que les systèmes de transport de ces dispositifs de stockage.

L'invention concerne également plus généralement un système de transport et de distribution desdites cassettes pour l'acheminement des marchandises contenues dans les dispositifs de stockage jusqu'à leur destination finale, c'est-à-dire le foyer de consommation.

### ARRIÈRE-PLAN TECHNIQUE

On entend par « foyer de consommation », une personne ou un groupe de personnes (par exemple une famille, une collectivité, une crèche, une cantine ...) habitant au même endroit et consommant des produits de consommation quotidienne.

On connaît dans l'état de l'art des conteneurs ou mini-conteneurs permettant de transporter des marchandises, par exemple des produits de consommation quotidienne (alimentaire, ménager, soin et beauté...). Ces conteneurs sont de taille réduite (volume généralement inférieurs à 1m³) afin de permettre le stockage d'une quantité de produits d'un ordre de grandeur d'un ou plusieurs foyers de consommation et de rester facilement manipulable.

Il existe ainsi dans l'état de la technique, des mini-conteneurs du type bacs plastique permettant de renfermer les produits dans le cadre d'un transport logistique du centre de distribution (par exemple un magasin) jusqu'au foyer de consommation (par exemple un appartement d'une famille). Ces mini-conteneurs de type bacs plastique sont remplis au centre de distribution puis fermés, préférentiellement de manière hermétique, à l'aide d'un couvercle, et sont ensuite entreposés dans un véhicule de transport, par exemple un camion ou camionnette.
Grâce au véhicule de transport, les bacs sont amenés jusqu'au foyer de consommation où les bacs plastiques sont déposés afin qu'on puisse récupérer les produits commandés. Un tel type de logistique est notamment connu dans le cadre de commandes de produits par Internet.

On connaît également les documents WO 2006/040421 et US 3 724 628 qui décrivent un dispositif de stockage associé à un système de transport de ce dispositif.

Cependant, des problèmes ont été soulevés quant à l'utilisation de ces solutions de l'état de la technique.

Premièrement, le traitement des mini-conteneurs est très généralement effectué à la main (remplissage, stockage dans un véhicule et transport, et dépôt jusqu'au foyer de consommation...), ce qui impose nécessairement un temps minimal de traitement et limite le nombre de commandes par personne destinée au traitement des bacs.

Deuxièmement, un bac est généralement destiné à un foyer, et il n'est pas prévu de pouvoir remplir le bac avec des marchandises commandées par plusieurs foyers de consommation sans risque de confusion des différentes destinations des marchandises.

Troisièmement, des problèmes ont été soulevés quant au stockage des bacs eux-mêmes qui ne peuvent pas être facilement calés dans un dispositif de transport, risquant par exemple un déplacement des bacs au sein d'un moyen de transport, pouvant engendrer une détérioration des marchandises à l'intérieur des bacs ou de tout élément percuté par l'un des bacs.

Dans le domaine, on connaît également les documents US 4 279 337, WO 2005/005289 et WO 97/15514 qui concernent un dispositif de stockage comprenant en outre un élément de crémaillère en coopération avec des moyens d'entraînement afin de provoquer le déplacement du dispositif et une surface d'appui destinée à reposer sur un élément de support.

Toutefois, des problèmes ont été soulevés quant à l'utilisation de ces solutions selon l'état de la technique.

En effet, ces solutions ne permettent pas de garantir la stabilité des dispositifs de stockage, notamment dans le cas où ces derniers ont une hauteur plus grande que les dimensions de leur base.

### BRÈVE DESCRIPTION DE L'INVENTION

Un but de la présente invention est de fournir un conteneur avec un dispositif de stockage permettant de résoudre les problèmes précités et offrant ainsi un conteneur amélioré par rapport à l'état de l'art, permettant notamment de faciliter le transport et le calage de ces dispositifs.

À cet effet, l'invention propose un conteneur tel que défini en revendication 1 annexée.

Avantageusement mais facultativement, le conteneur comprend en outre au moins un élément de calage du dispositif de stockage.

L'invention concerne également un système comprenant outre le conteneur précité, un dispositif de déplacement d'un dispositif de stockage selon l'invention, le dispositif de déplacement comprenant des moyens d'entraînement destinés à coopérer avec l'élément de crémaillère ou avec la surface d'appui du dispositif de stockage afin de provoquer le déplacement du dispositif de stockage.

Avantageusement mais facultativement, l'invention comprend au moins l'une des caractéristiques suivantes :
- le dispositif de déplacement comprend en outre un élément de support destiné à être en contact avec la surface d'appui du dispositif de stockage afin de supporter la quasi-totalité du poids du dispositif de stockage,
- les moyens d'entraînement comprennent une courroie crantée,
- les moyens d'entraînement comprennent une pluralité de roues dentées,
- les moyens d'entraînement comprennent une pluralité de cylindres souples,
- l'élément de support comprend une pluralité de rouleaux.

D'autres caractéristiques, buts et avantages de la présente invention apparaîtront à la lecture de la description détaillée qui va suivre, au regard des dessins annexés, donnés à titre d'exemples non limitatifs et sur lesquels :
- la figure 1 est une représentation schématique en vue cavalière d'un dispositif de stockage,
- la figure 2 est une représentation schématique de plusieurs ensembles de dispositifs de stockage,
- la figure 3 est une représentation schématique en vue cavalière d'un dispositif de stockage,
- la figure 4 est une vue à partir d'une face d'un dispositif de stockage,
- la figure 5 est une représentation schématique en vue cavalière d'un conteneur selon une réalisation possible de l'invention,
- la figure 6 est une représentation schématique en vue cavalière d'un conteneur selon une réalisation possible de l'invention,
- la figure 7 est une représentation schématique en vue cavalière d'un dispositif de déplacement selon une réalisation possible,
- la figure 8 est une représentation schématique en vue cavalière d'un dispositif de déplacement selon une autre réalisation possible,
- la figure 9 est une représentation schématique en vue cavalière d'un dispositif de déplacement selon une autre réalisation possible,
- la figure 10 est une représentation schématique en vue cavalière d'un dispositif de déplacement selon une autre réalisation possible,
- la figure 11 est une représentation schématique en vue cavalière d'un dispositif de déplacement selon une autre réalisation possible,
- la figure 12 est une représentation schématique en vue cavalière d'un dispositif de déplacement selon une autre réalisation possible,
- la figure 13 est une représentation schématique en vue cavalière d'un dispositif de déplacement selon une autre réalisation possible,
- la figure 14 est une représentation schématique en vue cavalière d'une rame de métro selon une réalisation possible,
- la figure 15 est une représentation schématique en vue cavalière d'une rame de métro selon une autre réalisation possible.

### DESCRIPTION DÉTAILLÉE

### Cassette

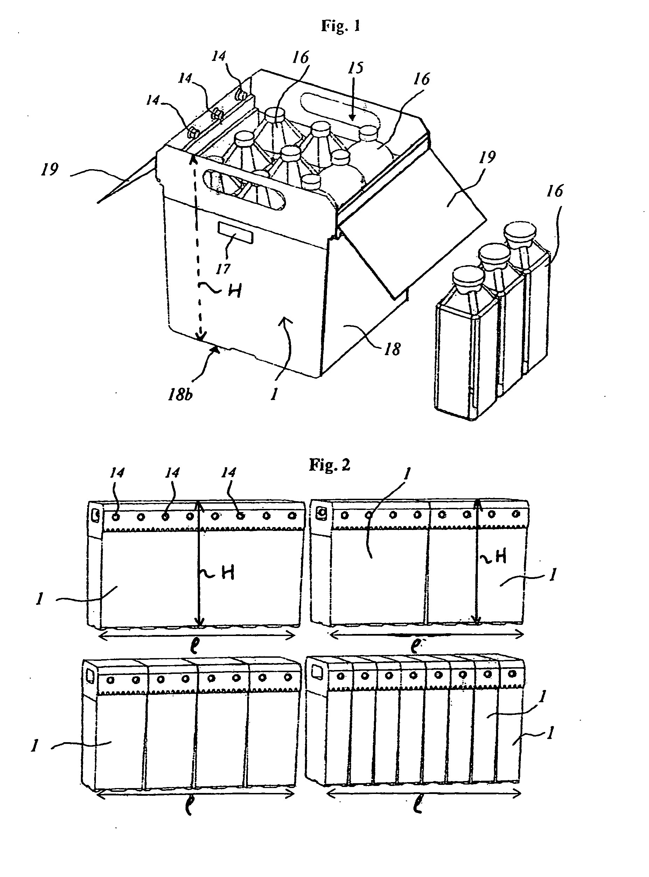

En référence à la figure 1, les cassettes sont généralement de forme approximativement parallélépipédique rectangle et sont avantageusement fermées par un couvercle 19 constitué d'une ou plusieurs parties d'une hauteur H.

Ces cassettes 1 forment une cavité 15, délimitée par un fond 18b et une pluralité de flancs 18 (généralement quatre). Ainsi il est possible d'entreposer des produits 16 dans la cavité 15 prévue à cet effet.

En référence à la figure 2, les cassettes sont préférentiellement de même section (et donc de même hauteur H) mais de longueur (et donc de volume) variable de telle sorte qu'un même espace puisse accueillir soit une seule cassette de grande longueur, soit une combinaison de cassettes de longueur inférieure mais pouvant être regroupées.

Par exemple, soit « 1 » étant la longueur de la plus grande cassette :
- 2 cassettes de longueur 1/2
- 4 cassettes de longueur *l*/4
- 8 cassettes de longueur 1/8
ou encore tout autre combinaison, par exemple :
- 1 cassette de longueur *l*/2 + 2 cassettes de longueur *l*/4
- 1 cassette de longueur *l**(6/8) + 1 cassette de longueur *l*/4
- 1 cassette de longueur *l**(6/8) + 2 cassettes de longueur *l*/8
- 1 cassette de longueur *l*/2 + 1 cassette de longueur 1/4 + 2 cassettes de longueur 1/8
- etc...

Afin d'assurer la manipulation de la cassette par des dispositifs de manipulation décrits ultérieurement, il est prévu qu'une cassette comprend des moyens supplémentaires tels que décrits ci-après.

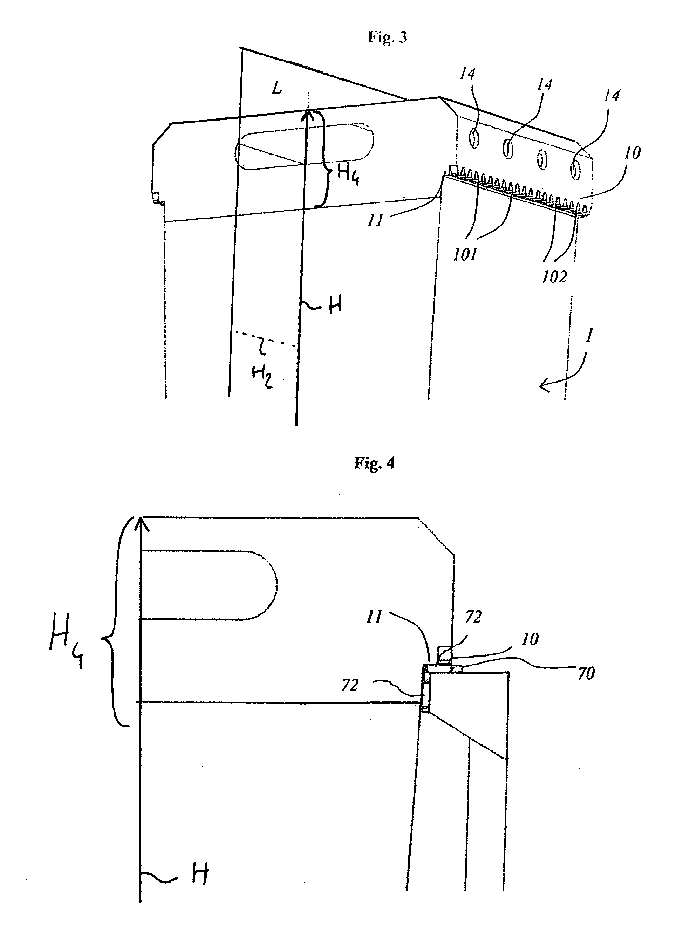

En référence aux figures 3 et 4, chaque cassette 1 est pourvue, de part et d'autre de son plan de symétrie L, de moyens 10 et 11 permettant, selon les besoins, d'assurer son déplacement, son positionnement précis et/ou son calage.

De manière générale, on entendra par des éléments « de part et d'autre » de la cassette, le fait que ces éléments soient disposés de manière symétrique par rapport au plan L passant par la médiane parallèle à la hauteur d'un flanc et la médiane d'un flanc opposé.

Plus précisément, ces éléments sont placés sur niveau d'une partie haute de la cassette, préférentiellement au dessus de la mi-hauteur H₂ correspondant au milieu de la hauteur H de la cassette 1. Plus préférentiellement encore, les moyens 10 et 11 sont situés dans le dernier quart H₄ de la hauteur en direction du haut de la cassette.

Ces moyens 10 et 11 comprennent plus précisément :
- un élément de crémaillère 10 comprenant un profil longitudinal comprenant une succession de dents 101 et de creux 102, les dents étant préférentiellement dirigées vers le bas. Comme illustré, la succession commence et finit par un creux de telle sorte que la mise côte à côte de deux cassettes permet de présenter une suite continue de dents et de creux ;
- une surface d'appui 11 consistant en un profil longitudinal plat adjacent à l'élément de crémaillère 10 et destiné à supporter une majorité ou la totalité du poids de la cassette.

De manière avantageuse et tel que représenté à la figure 3, la cassette comprend de part et d'autre des moyens 10 et 11 tels que décrits précédemment.

Selon les circonstances, ces moyens 10 et 11 interagissent en combinaison avec des dispositifs de manipulation tels que décrits ci-après, afin d'assurer, selon le cas, soit le positionnement précis et le calage des cassettes, soit leur déplacement.

La cassette 1 comprend également des moyens destinés à coopérer avec des éléments de calage afin de garantir leur calage comme expliqué ci-après.

### Dispositif de manipulation d'une cassette

Les dispositifs de manipulation comprennent des dispositifs de positionnement et de calage des cassettes. En outre les dispositifs de manipulation peuvent comprendre des dispositifs de déplacement des cassettes.

### Dispositifs de positionnement et de calage des cassettes

Un des buts de la présente invention est de permettre de positionner précisément les cassettes dans un réceptacle ou véhicule destiné à leur transport tout en les calant afin d'éviter que celles-ci ne se balancent et risquent ainsi de se détériorer ou de détériorer les produits qu'elles contiennent, ceci même dans l'hypothèse où une cassette n'occupe pas tout l'espace servant à son stockage et/ou à son transport.

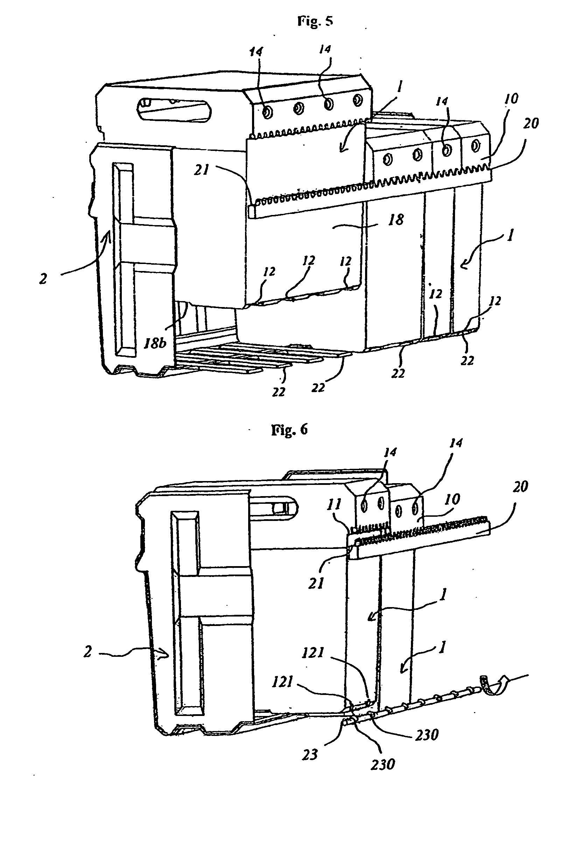

À cet effet et en référence à la figure 5, un réceptacle 2 tel qu'un mini-conteneur utilisé pour le transport des cassettes comprend des moyens de calage.

Les moyens de calage comportent préférentiellement de part et d'autre de la cassette 1 :
- un élément de crémaillère complémentaire 20 disposé de telle sorte qu'il soit complémentaire à l'élément de crémaillère 10 de la ou des cassette(s) 1, et que ces deux éléments de crémaillère 10 et 20 soient mises en prise lors de l'insertion de la cassette 1 dans le réceptacle 2;
- une surface de support 21 adjacente à l'élément de crémaillère complémentaire 20 et disposée de telle sorte qu'elle soit en contact de la surface d'appui 11 de la cassette 1 lors de l'insertion de la cassette 1 dans le réceptacle 2.

Dans ce mode de réalisation, les surfaces de support 21 sont situées de part et d'autre et supportent la majorité ou la totalité du poids des cassettes 1 afin d'éviter la détérioration des éléments de crémaillère 10 et des éléments de crémaillère complémentaire 20 qui, dans ce mode de réalisation, calent les cassettes pour éviter qu'elles se déplacent suivant l'axe longitudinal D.

Avantageusement, le dispositif tel que décrit ci-dessus est complété par d'autres des éléments de calage du dispositif et destinés à caler les cassettes en coopérant avec des moyens prévus sur la cassette. Les éléments de calage comprennent préférentiellement au moins l'un des éléments suivants :
- Au moins une échancrure 12 située sur le fond 18b et/ou les flancs 18 des cassettes 1, chaque échancrure 12 venant se positionner sur un profil complémentaire 22 situé dans le réceptacle 2, l'interaction entre ces deux éléments évitant tout balancement des cassettes 1.
- En référence à la figure 6, au moins un arbre à cames 23 situé dans le réceptacle dont les cames 230 s'engagent, par rotation, dans des évidements 121 situés sur le fond et/ou les flancs des cassettes 1.
- Un profil creux et souple qui, par gonflage vient bloquer les cassettes en appuyant sur leurs flancs ou leur fond. Dans ce dernier cas, les cassettes sont également bloquées dans leur partie supérieure, par exemple par des moyens complémentaires situés dans le couvercle du réceptacle 2.

Préférentiellement, les moyens de coopération avec les éléments de calage sont situés en partie basse de la cassette 1. Plus préférentiellement encore, les moyens de coopération avec les éléments de calage sont situés au niveau du fond de la cassette. En effet, les éléments de crémaillère et la surface d'appui du dispositif de stockage de l'invention étant situés au niveau d'une partie haute du dispositif, ce dernier nécessite des éléments de calage en partie basse pour éviter tout balancement suivant l'axe longitudinal D et donc toute détérioration lors d'éventuelles collisions avec d'autres cassettes.

Ces dispositifs de calage ont été décrits dans le cadre d'un réceptacle 2, tel qu'un mini-conteneur, mais ils peuvent tout à fait être envisagés par l'homme du métier dans le cadre d'un espace de stockage d'un véhicule de transport des cassettes 1.

### Dispositifs permettant le déplacement des cassettes

Les dispositifs de manipulation peuvent également comprendre des dispositifs de déplacement des cassettes.

### Déplacement des cassettes par glissement

Premièrement, il est prévu des dispositifs permettant le déplacement des cassettes par simple glissement sous l'effet de la gravité ou de l'inertie.

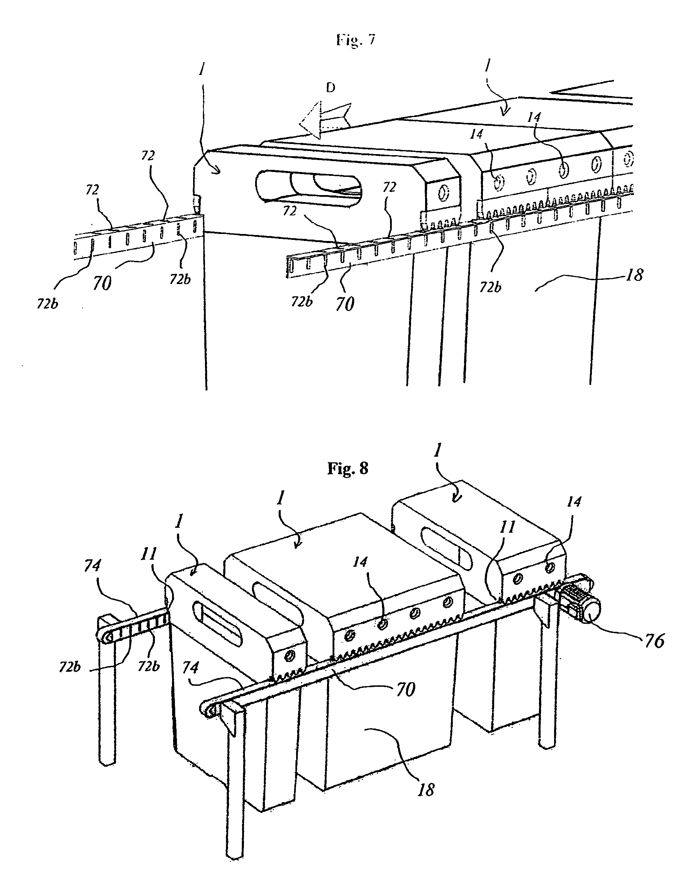

A cet effet et en référence à la figure 7, les surfaces d'appui 11 des cassettes décrites ci-dessus glissent suivant l'axe longitudinal D sur des rails plats 70, les rails ayant un faible coefficient de frottement et étant avantageusement munis de rouleaux 72 dépassant légèrement la surface des rails.

Préférentiellement, les rails sont en forme de cornière dont la partie verticale est elle-même pourvue de rouleaux 72b afin de guider les cassettes en réduisant ainsi les frottements par leur rotation.

Un tel dispositif permet de déplacer les cassettes 1 avec un minimum d'énergie, par gravité si les rails de support sont en légère inclinaison ou par simple inertie sur des rails horizontaux si la cassette a acquis préalablement une certaine vitesse.

### Déplacement des cassettes par entraînement

Deuxièmement, il est prévu des dispositifs permettant le déplacement des cassettes par entraînement grâce à des dispositifs de déplacement des cassettes.

Le déplacement des cassettes est lui-même assuré par plusieurs dispositifs envisageables dont des exemples non limitatifs et non exhaustifs sont donnés ci-après :

### • Entraînement par courroies lisses

En référence à la figure 8, il est prévu que les rails supports 70 soient pourvus d'un ou plusieurs couples de courroies lisses 74 entraînés par un ou plusieurs moteurs 76 et sur lesquelles viennent reposer les surfaces de contacts 11 des cassettes 1 décrites ci-dessus.

Un agencement avantageux de ce dispositif prévoit l'utilisation de cornières 70 métalliques ou en plastiques à faible coefficient de frottement, la courroie glissant sur la partie supérieure horizontale de cette cornière dont la partie verticale est pourvue de rouleaux 72b pour guider latéralement les cassettes 1.

### • Entraînement par courroies crantées

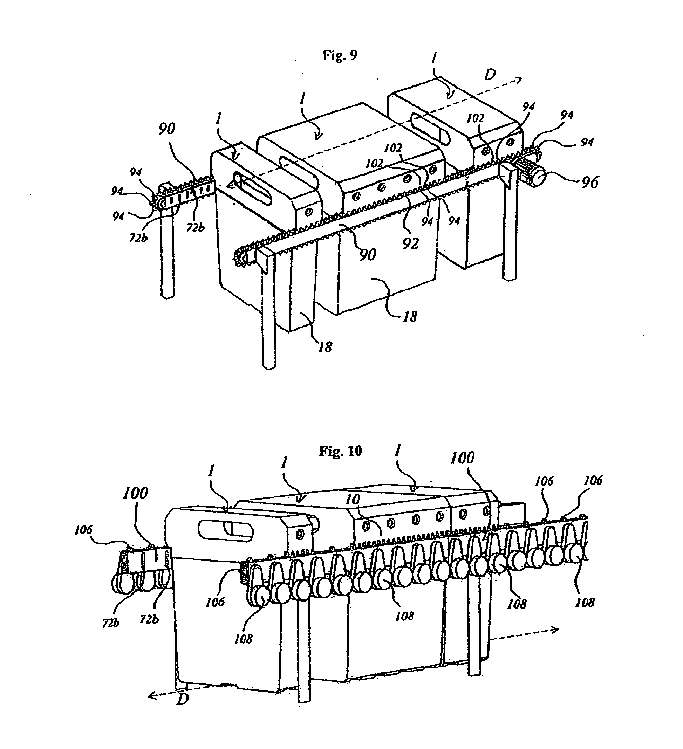

En référence à la figure 9, il est prévu avantageusement l'utilisation de rails supports 90 en contact avec les surface d'appui 11 des cassettes 1 par exemple tels que décrits ci-dessus afin de supporter la majeure partie ou la totalité du poids des cassettes 1 et de faciliter leur déplacement latéral par glissement. On y ajoute, de part et d'autre de la cassette, une courroie ou plusieurs courroies crantées 92, entraînées par un ou plusieurs moteurs 96, et dont les dents 94 viennent se loger dans les creux 102 de l'élément de crémaillère 10 de la ou des cassette(s) 1.

Un tel entraînement par courroies crantées permet d'assurer l'entraînement des cassettes avec une force suffisante pour, par exemple, leur faire gravir un plan incliné, même dans le cas d'un chargement lourd au sein des cassettes 1.

Une variante consiste à associer au dispositif d'entraînement par courroie crantée d'autres éléments d'entraînement des cassettes 1, par exemple agissant sur la partie inférieure. Il peut notamment s'agir d'une bande souple pourvue de profils venant s'encastrer dans les échancrures ou les évidements décrits ci-dessus.

Un tel dispositif d'entraînement par courroie crantée et bande souple associée permet notamment de faire gravir de fortes pentes aux cassettes.

### • Entraînement par roues dentées

En référence à la figure 10, il est prévu de manière avantageuse d'utiliser les rails supports 100 en contact avec les surface d'appui 11 des cassettes 1, par exemple tels que décrits ci-dessus afin de supporter la majeure partie ou la totalité du poids des cassettes 1 et de faciliter leur déplacement avec un minimum d'énergie, de compléter ce dispositif d'entraînement par au moins un couple de roues 106 dentées, chaque roue du couple étant situé de part et d'autre de la cassette.

Ces couples de roues 106 sont espacés de telle sorte que les cassettes soit toujours engrenées sur au moins un couple de roues dentées 106.

Les couple de roues dentées 106 situées en vis-à-vis sont aptes à tourner dans le même sens afin d'assurer l'entraînement de cassettes 1 dans une même direction. L'ensemble des roues 106 est avantageusement asservi (par chaîne ou courroie crantée, par exemple) afin de tourner de façon synchrone pour que leurs dents se positionnent convenablement par rapport aux creux 102 des éléments de crémaillères 10. Un ensemble de roues 106 ainsi asservi peut être actionné par un seul moteur (non représenté).

Il est cependant possible que deux couples adjacents (selon l'axe D) de roues 106 soient commandés indépendamment de façon à pouvoir tourner dans des sens opposés de façon à déplacer les cassettes entraînées par chaque couple de roues dans des directions opposées (selon l'axe D), ce qui permet d'entraîner individuellement chaque cassette pour, par exemple, effectuer un tri.

Une telle variante permet de disposer au mieux les cassettes 1 dans un espace contraint et de déplacer chaque cassette afin, par exemple, de la positionner précisément dans un emplacement précis (par exemple un sas) pour faciliter son insertion dans un emplacement libre d'un réceptacle ou véhicule de transport. Dans cette variante, les couples de roues dentées sont entraînés par des moteurs 108 (par exemple des moteurs pas à pas afin d'obtenir une grande précision de commande des moteurs).

### • Entraînement par cylindres souples

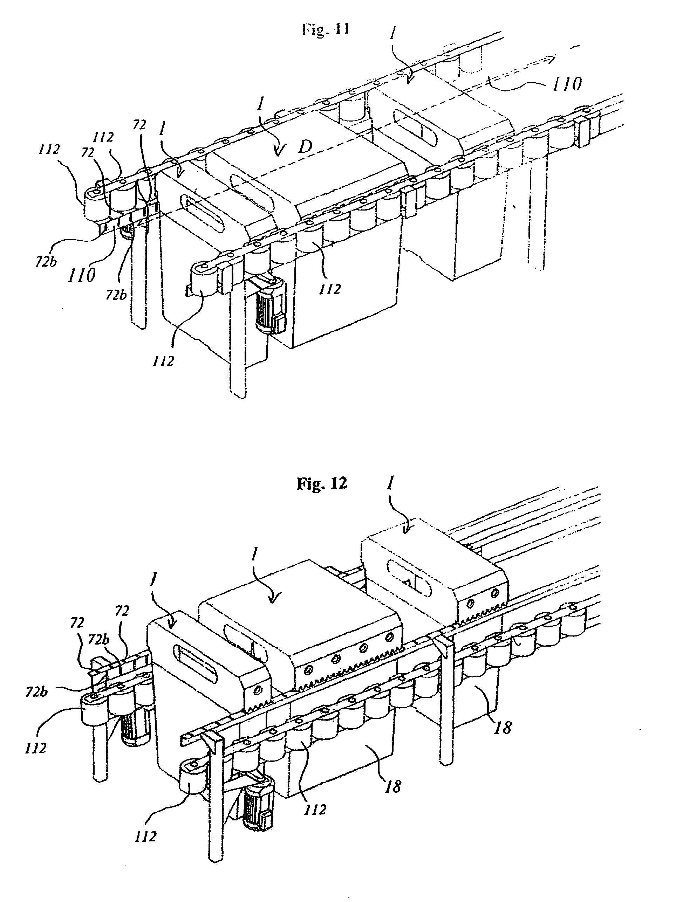

En référence à la figure 11, une première réalisation possible consiste à utiliser un couple de rails lisses 110 en contact avec les surface d'appui 11 des cassettes 1 pour supporter la majeure partie ou la totalité du poids des cassettes et faciliter leur déplacement et un ou plusieurs couples de cylindres souples 112, situés de part et d'autre des cassettes 1.

Les cylindres doivent avoir une souplesse telle qu'elle permette l'entrainement des cassettes sans pour autant les détériorer.

Réalisés en matière souple à fort coefficient de frottement, les cylindres 112 d'un couple tournent en sens contraire l'un de l'autre et entraînent par leur rotation et friction les cassettes 1, assurant ainsi leur déplacement dans une direction selon l'axe D.

Les cylindres souples peuvent agir sur une partie haute des cassettes 1 ou, préférentiellement, sur leurs flancs 18 comme illustré sur la figure 12. Cette disposition présente l'avantage d'éviter un balancement longitudinal des cassettes dès lors qu'un couple de cylindre 112 enserre la partie des cassettes où se situe, le plus souvent, leur centre de gravité lorsqu'elles sont chargées de produits.

Avantageusement, il peut être prévu que les supports des cylindres 112 comprennent des éléments en forme de cornière dont la partie verticale est elle-même pourvue de rouleaux 72b afin de guider les cassettes en réduisant ainsi les frottements par leur rotation.

Il est à noter que toute combinaison des différents dispositifs de déplacement est envisageable.

Ainsi, selon une variante possible, il est prévu d'associer les cylindres souples d'entraînement 112 aux courroies lisses décrites ci-dessus afin, par exemple, de donner une accélération aux cassettes.

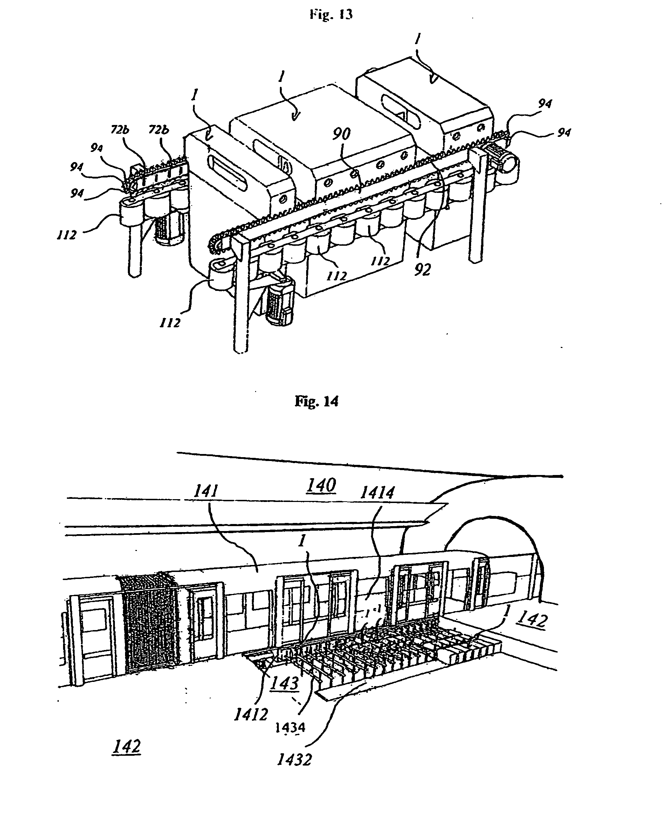

En référence à la figure 13, et selon une autre variante possible, il est prévu d'associer les cylindres souples au dispositif d'entraînement par courroies crantées décrit ci-dessus.

Selon une autre variante possible, il est prévu associer les cylindres souples au dispositif de déplacement par roues dentées décrit ci-dessus.

Tous les dispositifs de déplacement décrits ci-dessus peuvent assurer le déplacement des cassettes dans une même direction, mais peuvent également, à la jonction de deux systèmes d'entraînement commandés distinctement, permettre de déplacer une ou plusieurs cassettes dans une direction opposée à celle prise par les autres cassettes, ce qui constitue par exemple un système de tri.

### Déglacement vertical des cassettes

De retour aux figures 1 et 2, et de manière avantageuse, les cassettes 1 sont pourvues, de part et d'autre, de moyens permettant d'assurer leur déplacement vertical.

A cet effet, il est prévu de part et d'autre de la cassette au moins une cavité 14, de forme parallélépipédique ou cylindrique de sorte à faciliter l'insertion de plots de forme complémentaire appartenant par exemple à un bras robotisé destiné à la manipulation desdites cassettes 1.

L'insertion d'au moins un plot de façon simultanée de part et d'autre d'une cassette 1 permet alors au bras robotisé de déplacer celle-ci verticalement pour l'insérer ou l'extraire, par exemple, d'un réceptacle ou véhicule destiné à permettre son transport.

### Identification der cassettes

Avantageusement et de retour à la figure 1, chaque cassette est pourvue d'au moins une étiquette « intelligente » d'identification 17 de type RFID ou NFC qui permet de fournir toutes les informations utiles à son transport (identification de sa destination, de ses contraintes de transport, de sa destination finale, de son contenu...).

Une telle étiquette 17 permet notamment d'identifier le type de cassette qui la supporte, afin de coopérer avec les dispositifs de manipulation des cassettes.

L'identification par de telles étiquettes interrogeables à distance permet ainsi à un automate d'identifier avec précision et sans risque d'erreurs les cassettes à manipuler.

L'ensemble des caractéristiques décrites ci-avant rendent les cassettes particulièrement aptes à être manipulées et triées de façon totalement automatique, notamment au sein d'entrepôts.

Il est notamment prévu d'équiper de petits entrepôts urbains avec les équipements décrits ci-dessus. Le destinataire d'une ou plusieurs cassettes peut ainsi venir se faire délivrer automatiquement les cassettes, grâce aux étiquettes d'identification associées à un système de gestion des entrepôts.

### Transport des cassettes

L'invention concerne également les différents modes selon lesquels les cassettes peuvent être transportées.

Les différents dispositifs de manipulation des cassettes tels que décrits précédemment peuvent être prévus à l'intérieur de véhicules de transport (par exemple des camions ou camionnettes) de façon à permettre d'extraire automatiquement du véhicule de transport les cassettes arrivées sur leur lieu de destination (comme un foyer de consommation par exemple).

Selon une réalisation possible de la présente invention, les cassettes peuvent être insérées dans des mini-conteneurs standardisés 3 (par exemple correspondant à la norme européenne ISO 3394 - 600 X 400 X 400 mm). Ces dimensions permettent à un opérateur de manipuler le conteneur « à mains nues ».

Le fait que les dimensions des mini-conteneurs soient normalisées permet un stockage modulaire de ces mini-conteneurs et leur traitement automatisé de façon partielle ou totale.

Les cassettes et les mini-conteneurs peuvent être regroupés en racks, notamment en racks aux dimensions des euro-palettes les plus utilisées (1200 x 800 mm ou encore 1200 x 1200 mm) grâce à leur conformité au module de base européen.

Ces racks peuvent être avantageusement de hauteurs les plus utilisées par les camions ou autres véhicules de transport afin d'optimiser leur remplissage. Dans un souci de modularité, les racks peuvent constituer des chargements homogènes de cassettes ou mini-conteneurs ou être mélangés à des palettes ordinaires, dans des chargements mixtes.

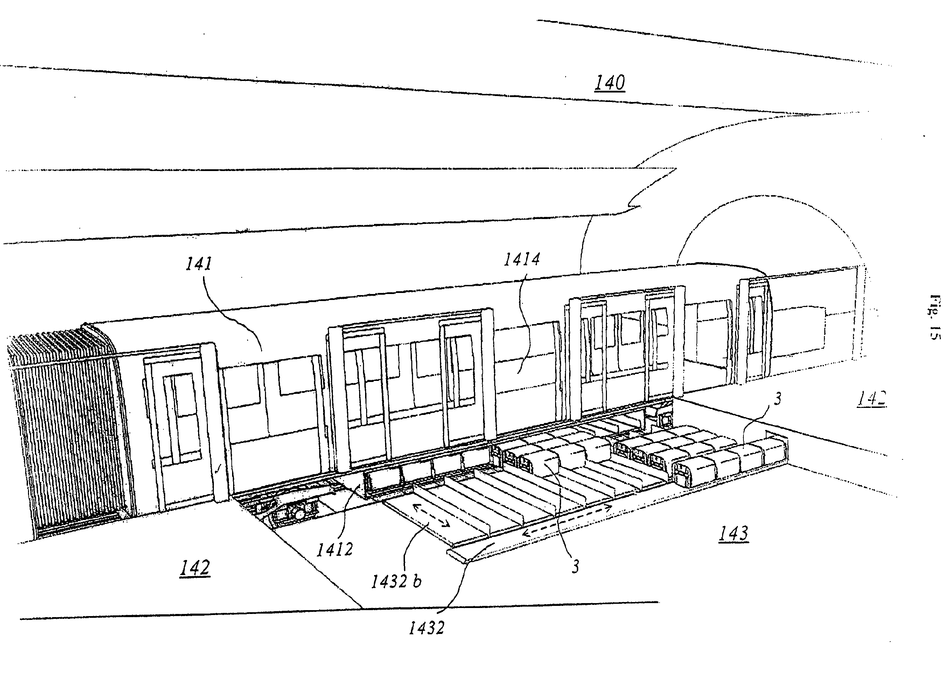

En milieu urbain, il est prévu que les cassettes ou conteneurs puissent emprunter un réseau souterrain composé :
- de quelques lignes de grand gabarit constituant les artères principales du réseau. Il est prévu par exemple que les réseaux métropolitains souterrains jouent ce rôle, en période d'inactivité (i.e. la nuit), les cassettes ou conteneurs y étant transportés par racks, pour réduire les manipulations. Il est également prévu que des wagons soient aménagés de telle sorte qu'ils puissent transporter simultanément des passagers et des cassettes ou mini-conteneurs, dans leur partie inférieure. Ce dispositif est particulièrement adapté aux lignes en pilotage automatique dont les quais sont pourvus de portes palières. Le positionnement précis des wagons à l'arrêt permet ainsi d'assurer le chargement et le déchargement des cassettes ou mini-conteneurs sous les quais, pendant que les passagers descendent ou montent dans le wagon comme illustré aux figures 14 et 15 :
   o En référence à cette dernière, au sein d'une station 140 destinée à recevoir une ou plusieurs rame(s) 141 de métro pour le transport de personnes au sein d'un habitacle 1414, les personnes accédant ou sortant de cet habitacle via une plateforme 142 appelée « quai », il est prévu une sous-plateforme 143 située en dessous du quai 142 (sur la figure la partie du quai 142 située au dessus de la sous-plateforme 143 a été enlevée pour la facilité de compréhension). Cette sous-plateforme 143 est destinée à recevoir des cassettes de stockage 1 telles que décrites précédemment, provenant d'un espace de stockage 1412 situé sous l'habitacle 1414 de la rame 141. Les cassettes 1 sont amenées depuis l'espace de stockage 1412 vers la sous-plateforme 143 à l'aide de moyens de poussage tels que des vérins ou de dispositifs 1413 de déplacement de la cassette 1 tels que décrits précédemment et étant eux-mêmes déplaçables vers l'extérieur de l'espace de stockage de façon à amener les cassettes vers la sous-plateforme 143. Une fois introduites au sein de la sous-plateforme, les cassettes 1 sont déplacées à l'aide de dispositifs de déplacement 1434 de la sous-plateforme 143, tel que décrits précédemment et amenant les cassettes à un dispositif ultérieur de traitement de la cassette, comme un tapis roulant 1432, transportant les cassettes 1 jusqu'à une station de traitement ultérieure.
   ∘ Selon une variante, et en référence à la figure 15, des mini-conteneurs standardisés 3 tels que décrits précédemment sont transportés dans la partie inférieure des wagons, leur insertion ou extraction des wagons étant assurée par divers moyens, tels que, notamment, des tapis-roulants 1432 bis, de même que leurs déplacements sur la plateforme 143 (tapis -roulant 1432).
- de petites lignes rapides secondaires interfacées aux lignes de grand gabarit par exemple dans des entrepôts où racks, conteneurs et cassettes sont traités automatiquement. Il peut être prévu que ces lignes soient parcourues par de petits trains à traction électrique dont les wagons transportent les cassettes, extraites des mini-conteneurs ou des racks. Les wagons sont d'une section qui excède légèrement la largeur et la hauteur d'une cassette (400 x 400 mm). Les tunnels de petit diamètre peuvent ainsi facilement trouver place dans le sous-sol afin de desservir les différents quartiers de la ville ;
- d'un réseau capillaire relié aux lignes rapides secondaires dans lequel les cassettes sont acheminées par de petits chariots automoteurs, à petite vitesse, à proximité immédiate du domicile de leur destinataire (foyer de consommation), voire au domicile même de celui-ci, dans les immeubles neufs aménagés à cet effet. Il est prévu alors que le domicile soit pourvu d'un sas d'entrée pour lesdites cassettes permettant au foyer de consommation d'accéder au contenu des cassettes de stockage par l'ouverture du sas d'entrée.

Une part majeure du transport de marchandises est ainsi effectuée en sous-sol, ne surchargeant pas d'avantage la surface. Préférentiellement, le transport est réalisé par énergie électrique, sans aucune pollution et sans aucun bruit pour la population urbaine.

Une fois déchargées de leur contenu, les cassettes peuvent être utilisées pour rapporter :
- des emballages vides (bouteilles vides, emballages spéciaux pour produits fragiles tels qu'audio, photo, vidéo...) vers des centres appropriés où, après nettoyage éventuel (bouteilles), ils pourront être réutilisés à l'identique, en réduisant ainsi les besoins de recyclage ;
- des déchets recyclables triés par catégorie, vers des centres aptes à les recycler, en réduisant ainsi le volume des déchets à enfouir ou incinérer :
- des déchets non recyclables qui pourraient ainsi être automatiquement acheminés vers des centres d'enfouissement ou d'incinération.

À cette fin, les produits concernés pourraient être placés dans des sacs dédiés pourvus d'étiquettes RFID contenant les informations utiles sur la destination de leur contenu.

## Revendications

1. Conteneur avec au moins un dispositif de stockage, tel qu'une cassette, reçu dans le conteneur, notamment pour le stockage de marchandises, le dispositif comprenant un logement de stockage et en outre :
• un élément de crémaillère (10) destiné à coopérer avec des moyens d'entraînement afin de provoquer le déplacement du dispositif ou avec un autre élément de crémaillère afin de provoquer le calage du dispositif,
• une surface d'appui (11) destinée à coopérer avec un élément de support, la surface d'appui étant adjacente à l'élément de crémaillère, et
• des moyens (12, 121) destinés à coopérer avec d'autres éléments de calage,
**caractérisé en ce que** le conteneur comprend au moins un élément de crémaillère complémentaire (20) destiné à coopérer avec l'élément de crémaillère (10) du au moins un dispositif de stockage (1) afin que la coopération des deux éléments de crémaillère provoque le calage dudit dispositif de stockage (1) au sein du conteneur (2).

2. Conteneur selon la revendication 1, lequel comprend en outre au moins un élément de calage (22 ou 23) situé dans la partie basse du dispositif de stockage (1).

3. Système comprenant un conteneur conforme à l'une des revendications 1 ou 2, **caractérisé en ce que** ledit système comprend en outre un dispositif de déplacement du dispositif de stockage, le dispositif de déplacement comprenant des moyens d'entraînement (74, 92, 106, 112) destinés à coopérer avec l'élément de crémaillère (10) ou avec la surface d'appui (11) du dispositif de stockage afin de provoquer le déplacement du dispositif de stockage (1).

4. Système selon la revendication 3, dans lequel le dispositif de déplacement comprend en outre un élément de support (70, 90, 100) destiné à être en contact avec la surface d'appui (11) du dispositif de stockage afin de supporter la quasi-totalité du poids du dispositif de stockage.

5. Système selon la revendication 4, dans lequel l'élément de support (70, 90, 100) comprend une pluralité de rouleaux.

6. Système selon la revendication 3 dans lequel les moyens d'entraînement comprennent une courroie lisse (74).

7. Système selon l'une des revendications 3 à 5, dans lequel les moyens d'entraînement comprennent une courroie crantée (92).

8. Système selon l'une des revendications 3 à 1, dans lequel les moyens d'entraînement comprennent une pluralité de roues dentées (106).

9. Système selon l'une des revendications 3 à 8, dans lequel les moyens d'entraînement comprennent une pluralité de cylindres souples (112).

## Patentansprüche

1. Behälter mit wenigstens einer Lagerungsvorrichtung, so wie eine Kassette, die in dem Behälter aufgenommen ist, insbesondere für die Lagerung von Waren, wobei die Vorrichtung eine Lagerungsaufnahme umfasst und außerdem:
- ein Zahnstangenelement (10), das bestimmt ist, mit Antriebsmitteln zusammenzuwirken, um das Verlagern der Vorrichtung zu bewirken, oder mit einem anderen Zahnstangenelement zusammenzuwirken, um die Positionierung der Vorrichtung zu bewirken,
- eine Stützoberfläche (11), die bestimmt ist, mit einem Trägerelement zusammenzuwirken, wobei die Stützoberfläche in Nähe des Zahnstangenelements ist, und
- Mittel (12, 121), die bestimmt sind, mit anderen Positionierelementen zusammenzuwirken,
**dadurch gekennzeichnet, dass** der Behälter wenigstens ein komplementäres Zahnstangenelement (20) umfasst, das bestimmt ist, mit dem Zahnstangenelement (10) der wenigstens einen Lagerungsvorrichtung (1) zusammenzuwirken, damit das Zusammenwirken der zwei Zahnstangenelemente das Positionieren der Lagerungsvorrichtung (1) innerhalb des Behälters (2) bewirkt.

2. Behälter nach Anspruch 1, welcher außerdem wenigstens ein Positionierelement (22 oder 23) umfasst, das in dem unteren Teil der Lagerungsvorrichtung (1) angeordnet ist.

3. System, das einen Behälter gemäß einem der Ansprüche 1 oder 2 umfasst, **dadurch gekennzeichnet, dass** das System außerdem eine Verlagerungsvorrichtung der Lagerungsvorrichtung umfasst, wobei die Verlagerungsvorrichtung Antriebsmittel (74, 92, 106, 112) umfasst, die bestimmt sind, mit dem Zahnstangenelement (10) oder mit der Stützoberfläche (11) der Lagerungsvorrichtung zusammenzuwirken, um die Verlagerung der Lagerungsvorrichtung (1) zu bewirken.

4. System nach Anspruch 3, in dem die Verlagerungsvorrichtung außerdem ein Trägerelement (70, 90, 100) umfasst, das bestimmt ist, in Kontakt mit der Stützoberfläche (11) der Lagerungsvorrichtung zu sein, um so gut wie alle Gewichte der Verlagerungsvorrichtung zu tragen.

5. System nach Anspruch 4, in dem das Trägerelement (70, 90, 100) mehrere Rollen umfasst.

6. System nach Anspruch 3, in dem die Antriebsmittel einen glatten Riemen (74) umfassen.

7. System nach einem der Ansprüche 3 bis 5, in dem die Antriebsmittel einen Zahnriemen (92) umfassen.

8. System nach einem der Ansprüche 3 bis 7, in dem die Antriebsmittel mehrere Zahnräder (106) umfassen.

9. System nach einem der Ansprüche 3 bis 8, in dem die Antriebsmittel mehrere nachgiebige Zylinder (112) umfassen.

## Claims

1. A container with at least a storage device, such as a cassette, received in the container, especially for the storage of merchandise, the device comprising a storage unit, and further comprising:
• a rack element (10) designed to cooperate with drive means to cause the displacement of the device or with another rack element to cause the locking of the device,
• a support surface (11) designed to cooperate with a support element, the support surface being adjacent to the rack element, and
• means (12, 121) designed to cooperate with other locking elements,
**characterised in that** the container comprises at least one complementary rack element (20) designed to cooperate with the rack element (10) of the at least one storage device (1) so that cooperation of the two rack elements causes locking of the abovesaid storage device (1) within the container (2).

2. The container as claimed in Claim 1, which further comprises at least one locking element (22 or 23) located in the lower part of the storage device (1).

3. A system comprising a container as claimed in Claims 1 or 2, **characterised in that** the abovesaid system comprises in addition a displacement device of the storage device, the displacement device comprising drive means (74, 92, 106, 112) designed to cooperate with the rack element (10) or the support surface (11) of the storage device to cause displacement of the storage device (1).

4. A system as claimed in Claim 3, in which the displacement device further comprises a support element (70, 90, 100) designed to be in contact with the support surface (11) of the storage device to support most of the weight of the storage device.

5. A system as claimed in Claim 4, in which the support element (70, 90, 100) comprises a plurality of rollers.

6. A system as claimed in Claim 3, in which the displacement means comprise a smooth belt (74).

7. A system as claimed in any one of Claims 3 to 5, in which the displacement means comprise a notched belt (92).

8. A system as claimed in any one of Claims 3 to 7, in which the displacement means comprise a plurality of toothed wheels (106).

9. A system as claimed in any one of Claims 3 to 8, in which the displacement means comprise a plurality of flexible cylinders (112).
